(19) Europäisches Patentamt / European Patent Office / Office européen des brevets

(11) **EP 3 325 734 B1**

(12) **FASCICULE DE BREVET EUROPEEN**

(45) Date de publication et mention de la délivrance du brevet:
**20.01.2021 Bulletin 2021/03**

(21) Numéro de dépôt: **16757294.0**

(22) Date de dépôt: **21.07.2016**

(51) Int Cl.:
*E06B 9/24* *(2006.01)*     *E04F 10/08* *(2006.01)*
*E06B 7/086* *(2006.01)*     *E06B 9/32* *(2006.01)*

(86) Numéro de dépôt international:
**PCT/FR2016/051892**

(87) Numéro de publication internationale:
**WO 2017/017353 (02.02.2017 Gazette 2017/05)**

(54) **SYSTÈME DE PERSIENNES INCLINÉES ET FIXES**

GENEIGTES UND FIXIERTES JALOUSIESYSTEM

INCLINED AND FIXED BLIND SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.07.2015 FR 1501606**

(43) Date de publication de la demande:
**30.05.2018 Bulletin 2018/22**

(73) Titulaire: **LES INGENIEURS DU SOLEIL**
**31260 Montespan (FR)**

(72) Inventeur: **SEMBELY, Xavier**
**31400 Toulouse (FR)**

(74) Mandataire: **Argyma**
**14 Boulevard de Strasbourg**
**31000 Toulouse (FR)**

(56) Documents cités:
**CN-U- 204 282 680     FR-A1- 2 574 469**
**US-A- 5 285 315     US-A- 6 105 318**

# EP 3 325 734 B1

**Description**

Cette invention appartient au domaine du chauffage de bâtiments par énergie solaire.

L'énergie solaire permet un apport gratuit au chauffage des bâtiments. Elle permet donc des économies substantielles sur les modes de chauffage traditionnels en hiver pour le chauffage de bâtiments, aux latitudes tempérées. Ceci incite à augmenter les surfaces vitrées des bâtiments, notamment dans les directions exposées au soleil, c'est-à-dire de l'est à l'ouest en passant par le sud pour les régions tempérées de l'hémisphère nord, de façon à laisser passer une plus grande quantité de flux solaire gratuit.

Malheureusement, augmenter considérablement les surfaces vitrées entraine également une augmentation significative de l'apport solaire en été, en particulier pour les surfaces vitrées orientées vers l'est et l'ouest. Les surfaces orientées ouest posent un problème particulier car le flux solaire arrive à une heure ou le bâtiment a déjà été chauffé pendant toute la journée. Les surfaces orientées au sud jouissent en général d'une situation plus favorable du fait de la très haute position du soleil vers midi en été ce qui limite de fait les entrées solaires.

De même, l'énergie solaire est récupérée avantageusement par des dispositifs de capteurs solaires thermiques ou thermodynamiques, installés généralement sur le toit d'un bâtiment, utilisant comme principe le chauffage de certaines parties de ces capteurs. Le réglage de ces capteurs est généralement rendu complexe par le fait que celui-ci doit permettre un bon fonctionnement pendant les mois froids, tout en évitant la surchauffe pendant les mois chauds.

Employées depuis longtemps, les persiennes ont permis de répondre à la problématique de flux solaire, en bloquant les rayons lumineux dans une certaine direction. Cependant, la quasi-totalité des persiennes connues ont des lames dont les directions n'ont pas été optimisées. En particulier les lames sont disposées en général horizontalement dans le sens de leur longueur, et plus rarement verticalement.

Pour que ces persiennes soient efficaces pour bloquer le flux solaire pendant les mois chauds, il est impératif que celles-ci soient disposées à l'extérieur, de façon à ce que l'énergie solaire absorbée par les persiennes ne soit rejetée sous forme de chaleur qu'à l'extérieur du bâtiment.

De façon à améliorer leurs systèmes, certains concepteurs de persiennes ont été amenés à mécaniser ces persiennes pour ajuster leur orientation, de façon à pouvoir à volonté bloquer le flux solaire ou le laisser rentrer sur commande. C'est ce type de mécanisme en particulier qui est décrit dans le brevet européen EP2245254. Ces systèmes mécanisés sont chers, surtout lorsqu'ils doivent être placés à l'extérieur et donc résister aux intempéries.

De façon à améliorer à moindre coût l'efficacité énergétique des bâtiments ou le réglage des capteurs solaires, il est utile de développer un système de persiennes laissant rentrer le flux solaire en hiver et le bloquant en été. De plus on veillera à ce que cette solution soit adaptée pour des baies vitrées Sud-Est et Sud-Ouest en particulier très sensibles au flux solaire d'été.

Le brevet US6105318A propose une solution basée sur des lames inclinées positionnées devant une fenêtre. Cette invention est déclinée en plusieurs variantes. L'idée de départ est que toutes les lames de persiennes positionnées devant les fenêtres diversement orientées d'un même bâtiment sont toutes orientées selon un plan commun. Cette notion de plan commun apparait dès la première revendication et est la base de ce brevet. Or cette idée de départ n'est pas optimale du point de vue de la protection solaire d'été et d'hiver. Cela est évident dans le texte de la description où l'auteur décrit comment partant de la solution donnée par des formules génériques (indiquées aux revendications 6 et 16), il est obligé d'itérer et de dévier de ces formules pour trouver un meilleur compromis été-hiver pour l'exemple d'une fenêtre orientée ouest à 40° de latitude (colonnes 10, 11 et 12 du texte du brevet). De plus, ce brevet se limite aux fenêtres verticales ; enfin il propose des variantes avec des lames incurvées, dont l'intérêt n'est pas démontré, et qui ne seront pas reprises ici. Ce brevet américain reste néanmoins l'état de l'art le plus proche pour l'invention proposée ci-dessous, notamment en termes de motivation et de type de solution apportée. Nous reviendrons donc sur ce brevet plus loin dans ce texte, suite à la description précise de l'invention, et nous montrerons chiffres à l'appui en quoi la présente invention propose une avancée significative par rapport à cet état de l'art.

L'invention a donc pour objet de faire un pare-soleil pour des surfaces de bâtiments d'habitation aussi bien qu'industriel et particulièrement adapté aux immeubles de bureaux qui sont bien souvent couverts de grandes surfaces vitrées.

La même invention peut également être appliquée comme dispositif de protection saisonnière de capteurs solaires thermiques ou thermodynamiques installés sur un bâtiment.

L'invention s'applique à toute ouverture, ou toute surface (2) du bâtiment (1). Il s'agira le plus souvent de vitrages, mais elle peut s'appliquer à l'ouverture devant une terrasse, un patio ou un atrium, cette ouverture étant dans ce cas une surface du bâtiment non matérialisée. Ces ouvertures peuvent donc éventuellement être sans vitrage, mais on ne considérera dans le cadre de cette invention que les ouvertures planes. Si une ouverture du bâtiment n'était pas plane, on pourrait tout de même y appliquer l'invention en décomposant l'ouverture en plusieurs ouvertures planes. L'invention s'applique également à des surfaces matérielles appartenant à un bâtiment, dont on souhaitera optimiser l'exposition au flux solaire en fonction de la saison, telles que des murs, murs trombe en particulier, ou des capteurs solaires, dont on souhaitera éviter la surchauffe pendant les mois d'été. L'invention s'applique quelle que soit l'orientation de la surface, fictive ou réelle du bâtiment, qu'elle soit verticale (c'est-à-dire de normale horizontale, exemple d'une fenêtre d'un mur d'une maison) ou non (exemple des vasistas). De même le fait que l'ouverture ou la fenêtre (2) soit ouvrable ou non ne change rien à l'applicabilité de l'invention, dans le cas d'une baie vitrée sur battant par exemple, on considérera pour l'application de l'invention le cas du vitrage en position fermée.

L'invention peut encore s'appliquer à tout système ornemental disposé sur un bâtiment, tel qu'un bardage bois composé de lattes en claire-voie auquel on souhaitera ajouter une fonction thermique sélective en fonction de la saison pour sa surface portante, le plus souvent un mur du bâtiment, ou encore un balcon terrasse.

Dans la suite de la description de cette invention, on parlera donc de 'surface' ou bien de 'surface protégée d'un système de persiennes', et éventuellement de 'vitrage' lorsque la discussion ne s'applique qu'à ce dernier cas.

Le bâtiment (1) considéré est positionné à une latitude notée λ.

Les vecteurs en 3 dimensions sont indiqués par des lettres majuscules en gras, en particulier **B** (3) pour le vecteur normal sortant de la surface protégée d'une persienne, **S** pour la direction du soleil, vecteur unitaire allant du soleil vers l'objet éclairé, **N** (4) pour le vecteur directeur indiquant l'axe de rotation de la Terre, et orienté vers le nord.

Deux repères orthonormés sont utilisés dans la description de l'invention :

- Un repère Terre journalier (6), défini comme ayant son axe Z aligné avec la direction du pôle nord céleste, Y vers l'est (à la position du bâtiment), et X qui complète le repère. Dans ce repère, le soleil est dans le plan X-Z au midi solaire.
- et le repère local (5), défini comme ayant son axe Z vers le haut selon la verticale locale, Y vers l'est, et X qui complète le repère.

Dans le repère local (5) ainsi défini, le vecteur **N** (4) a comme composantes [-cos(λ) ; 0 ; sin(λ)]

Exposé de l'invention :

La présente invention vise un dispositif de pare-soleil pour une surface plane d'un bâtiment, selon la revendication 1. L'idée principale consiste à installer un système de persiennes devant le vitrage, et à différencier les orientations des lames (8) de la persienne en fonction de la latitude λ du bâtiment (1) considéré et de l'orientation de la surface (2) considérée.

Il devient alors possible de proposer le type de persiennes le plus simple, c'est-à-dire une simple claie de lames parallèles et fixes, non mécanisées, donc très bon marché. Simplement l'orientation exacte des lames (8) sera optimisée en fonction des trajectoires du soleil vues de la surface (2) considérée, de façon à offrir l'ombrage minimal en hiver, et un ombrage significatif, voire total, en été.

Plutôt que de simples lames (8), des variantes de l'invention décomposent ces lames en éléments d'une structure formant par groupes la fonction d'une lame. On appellera alors ces structures des « structures lamellaires ». De même, certaines variantes de l'invention décrites plus loin ne sont pas situées devant le vitrage, mais intégrées à celui-ci.

Les persiennes sont caractérisées géométriquement par 4 caractéristiques majeures et quelques caractéristiques mineures. Les caractéristiques majeures sont l'inclinaison des lames (8) dans le sens de leur longueur, que l'on nommera « inclinaison longitudinale » dans la suite, « l'ouverture » des lames, c'est-à-dire l'angle d'inclinaison des lames dans le sens de leur largeur, que l'on nommera « inclinaison transverse » dans la suite, la largeur des lames et leur espacement. Les deux dernières caractéristiques peuvent être réduites au simple ratio de ces deux grandeurs, les persiennes de même ratio ne se différentiant alors que par une simple homothétie, mais qui n'affecte pas au premier ordre les propriétés d'ombrage des persiennes.

Les caractéristiques mineures peuvent être ensuite l'épaisseur des lames (8), le rayon de courbure des lames qui pour des raisons de rigidité peuvent avoir une section légèrement incurvée plutôt que simplement planes, et le mode d'accroche des lames entre elles.

La présente invention concerne les caractéristiques majeures et non ces caractéristiques mineures, à l'exception de l'épaisseur des lames pour certaines variantes de l'invention. Pour la mise en œuvre du système de persiennes en ce qui concerne ces caractéristiques mineures, on utilisera les techniques selon les règles de l'art pour la bonne tenue du dispositif, en particulier dans des conditions extérieures. De même, la solution technique de réalisation des persiennes n'est pas précisée par cette invention. Il peut s'agir aussi bien de lattes en bois ou en inox, ou bien d'une persienne moulée d'un bloc en matière plastique, de rubans tendus ou bien de toute autre technique de l'état de l'art, y compris des lames intégrées dans d'autres dispositifs, comme par exemple du verre opacifié par endroits. L'invention principale porte sur les caractéristiques géométriques permettant un fonctionnement optimal pour ces persiennes, et comment ajuster ces caractéristiques en fonction des solutions techniques choisies.

La détermination de l'inclinaison longitudinale se fait de la façon suivante :
Sur des persiennes classiques, les lames sont empilées en général horizontalement, c'est à dire que l'axe selon la longueur des lames est horizontale (inclinaison nulle).

Sur un système de persiennes selon l'invention, chaque lame ou structure lamellaire (8) est inclinée longitudinalement selon une direction sensiblement proche d'un vecteur directeur noté **V** (7), et défini comme expliqué ci-après : Si **S** est la direction solaire (vecteur unitaire dirigé depuis le soleil), et **B** (3) la normale sortante de la baie vitrée, le flux est maximum lorsque le produit scalaire **S.B** est maximum. On notera $S_{max}$ la direction solaire correspondant à ce maximum. Dans le repère Terre (centré au centre de la Terre avec Z au Nord), **S** décrit en une journée un cercle autour de **N** (4), et **B** (3) est un vecteur fixe. $S_{max}$ se situe donc dans le plan formé par les vecteurs **B** et **N**, et ce plan est caractérisé par leur produit vectoriel **V = B ^ N**. Cela est indépendant de l'élévation du soleil, c'est à dire de la saison, et $S_{max}$ correspond à une heure solaire donnée, qu'on notera $h_{max}$. Cette heure $h_{max}$ se calcule aisément en projetant **B** sur le plan de l'équateur de la Terre, et en déterminant à quelle heure solaire cette projection correspond à la direction solaire (par exemple le jour de l'équinoxe). On notera qu'on parle bien d'heure solaire ici, et non pas d'heure locale, l'heure solaire n'est donc pas corrigée des effets de longitude, des changements d'heures, ni des décalages dus à l'excentricité de l'orbite terrestre. Selon l'heure solaire, midi correspond exactement au moment où le Soleil se trouve dans la direction du sud (pour un bâtiment situé au nord du tropique du Cancer).

De par sa construction mathématique, le vecteur **V** (7) est un vecteur directeur de la droite intersection du plan de la surface protégée d'un système de persiennes, et du plan de l'équateur. La trajectoire du soleil proche du point de flux maximum est selon le vecteur **V**, quelle que soit l'élévation du soleil. Ainsi, en plaçant les lames (8) des persiennes dans une direction parallèle à **V**, les calculs géométriques d'obstruction calculés au moment de $S_{max}$, continuent d'être valables tant que le soleil ne s'éloigne pas trop de $S_{max}$, ce qui veut dire pendant toute la période ou le flux entrant sur le vitrage est significatif, soit quelques heures autour de $h_{max}$. La direction **V** (7) est donc la direction optimale pour l'inclinaison longitudinale des lames (ou structures lamellaires) car tout réglage des persiennes réalisé pour l'heure d'ensoleillement maximal se prolongera plusieurs heures avant et après cette heure d'ensoleillement maximal.

Les persiennes sur des surfaces orientées sud, pour lesquelles l'inclinaison longitudinale optimale correspond à un agencement horizontal des lames constitue un cas particulier qui est considéré comme faisant partie de l'état de l'art.

Pour illustration, le tableau suivant donne l'inclinaison de **V** (7), en fonction de la latitude λ du bâtiment (1) et de l'orientation de la surface **B**, dans le cas particulier, mais le plus courant, de surfaces (2) installées de façon verticale (exemple : baies vitrées) :

| Latitude du bâtimen t | Orientation Surface | Sud | 15° W | 30° W | 45° W | 60° W | 75° W | 90° W | 105° W |
|---|---|---|---|---|---|---|---|---|---|
| 30° | Inclinaison longitudinale | 0° | -24° | -41° | -51° | -56° | -59° | -60° | -59° |
| 40° | | 0° | -17° | -31° | -40° | -46° | -49° | -50° | -49° |
| 45° | | 0° | -15° | -27° | -35° | -41° | -44° | -45° | -44° |
| 50° | | 0° | -12° | -23° | -31° | -36° | -39° | -40° | -39° |
| 60° | | 0° | -8° | -16° | -22° | -27° | -29° | -30° | -29° |

Le tableau fournit uniquement les valeurs pour les surfaces orientées partiellement à l'ouest. La convention de signe signifie que les lames sont orientées en haut à gauche et en bas à droite, lorsque l'on regarde les persiennes depuis l'intérieur du bâtiment.

Pour des surfaces orientées à l'est, les valeurs opposées s'appliquent directement, c'est à dire que l'inclinaison optimale est dans l'autre sens.

Pour des vitrages ou surfaces (2) installées de façon non verticale, par exemple pour des vitrages de toit, on appliquera simplement la formule générique donnée. Le vecteur unitaire **B** (3) s'écrivant dans le repère local (5) [bx; by ; bz], le vecteur **V** (7) est donc égal à :

[by.sinλ. ; -bz.cosλ.-bx.sinλ, ; by.cosλ], et l'angle d'inclinaison longitudinale, est égal à arcsin(by.cosλ/v), où v est la norme du vecteur **V** (en effet celui-ci n'est en général pas un vecteur unitaire) ; c'est-à-dire que v est donné par :

$$v = \sqrt{(by^2 + bx^2.sin^2\lambda + bz^2.cos^2\lambda + 2.bx.bz.sin\lambda.cos\lambda)}$$

Afin de permettre de limiter le nombre d'orientations possibles pour des raisons industrielles, une tolérance est proposée sur l'inclinaison longitudinale des lames (8) par rapport à la direction optimale définie ci-dessus. Si la direction de la longueur des lames est sous optimale de 15°, un calcul simplifié indique que la projection de la lame dégrade d'environ 8% l'obstruction du dispositif pour le cas hiver, 2h avant ou après l'heure d'ensoleillement maximal de la surface (2) considérée. Cette dégradation augmente rapidement lorsqu'on s'éloigne encore plus de la direction de $S_{max}$. En prenant une précision de +/- 15°, on observe que 5 inclinaisons différentes permettront de couvrir les latitudes de 30°à 60° ainsi que toutes les orientations de surface (2) dans le cas où celle-ci est verticale et avec une orientation allant de l'est à l'ouest en passant par le sud.

La même invention s'applique également à un système d'habillage ornemental de la surface d'un bâtiment constitué de tasseaux parallèles, tel qu'un bardage en claire-voie, dont on souhaitera optimiser les propriétés géométriques afin d'amener du flux solaire à la surface située en dessous en hiver, et l'en protéger l'été. La seule différence avec l'invention présentée ci-dessus vient que la fonction thermique selon la saison est secondaire devant la fonction ornementale. Plutôt que de lames, on parlera donc de tasseaux, celles-ci étant des pièces longilignes, mais pas forcément minces en épaisseur. L'espace entre les tasseaux permettra un éclairement direct de la surface en dessous des tasseaux, différentié selon la saison. L'inclinaison longiligne de ces tasseaux devra donc suivre les mêmes consignes que celles données pour des lames d'un système de persiennes, c'est-à-dire être sensiblement parallèle à la direction donnée par le vecteur **V** (7) décrit précédemment, ou autrement dit, être parallèle à l'axe défini comme l'intersection du plan de la surface (2) et du plan de l'équateur terrestre vu du bâtiment (1).

Ce type de système sera particulièrement intéressant dans le cas de murs orientés entre 45° et 90° vers l'est ou vers l'ouest, car de simples tasseaux de section carrée laisseront facilement passer entre leurs interstices le soleil d'hiver tout en rejetant le soleil d'été. Cela est dû au fait que l'inclinaison transverse optimale est proche de la normale à la surface pour ces orientations, comme expliqué ci-après.

La détermination de l'inclinaison transverse se fait de la façon suivante :
L'ouverture, c'est-à-dire l'inclinaison transverse, des lames ou structures lamellaires (8) permet également d'optimiser les entrées de flux solaire.

L'inclinaison longitudinale ayant été déterminée par le vecteur **V** (7) dans le paragraphe précédent, on considérera le plan perpendiculaire à **V** pour déterminer l'inclinaison transverse. En tournant autour de la direction **V** (7), il existe notamment un angle où la largeur de la lame visera une direction du plan de l'équateur terrestre, ce qui constituera notre référence pour la détermination de l'angle de la lame autour de **V** pour un bâtiment de latitude $\lambda$ et une surface d'orientation donnée. Cette direction de référence peut être facilement déterminée en calculant le produit vectoriel entre **V** (7) et **N** (4), que l'on nommera **E = N ^ V**. Le vecteur **E** ainsi défini est un vecteur directeur de la droite visant la direction de l'équateur. Cette référence présente l'avantage de décrire très simplement l'invention, comme proposé ci-dessous. Cette description est univoque, c'est-à-dire qu'elle décrit entièrement la solution. En revanche, cette référence peut sembler relativement abstraite pour le fabricant du système de persiennes. Il conviendra donc de recalculer ensuite cet angle avec une référence plus naturelle pour la mise en œuvre, par exemple avec comme référence la direction normale à la surface. Pour cela, on calculera simplement l'angle entre ce vecteur **E** et la normale à la surface **B**, et on ajoutera algébriquement cet angle pour obtenir l'inclinaison transverse par rapport à la normale du système de persiennes.

L'inclinaison transverse doit être définie de façon à maximiser le flux entrant en hiver. Il faut donc que la largeur de la lame soit parallèle à la direction du soleil en hiver, de façon à ce que l'ombre (19) de la lame soit réduite au minimum, voire qu'elle n'excède pas l'épaisseur de la lame. L'élévation du soleil par rapport au plan de l'équateur évolue au cours de l'année entre -23.4° et +23.4°. De façon à minimiser l'ombrage entre l'équinoxe d'automne et l'équinoxe de printemps, il est donc nécessaire d'incliner la largeur de la lame dans une direction en dessous du plan de l'équateur. L'angle optimal pour maximiser le flux solaire sur la période hivernale typiquement du 21 septembre au 21 mars est d'environ 15° en dessous de la direction de l'équateur (portée par le vecteur **E**). Cette valeur est calculée en faisant l'hypothèse simplificatrice que l'élévation solaire suit une loi en sinus de l'équinoxe à l'autre, d'amplitude -23.4°, et en intégrant ce demi-sinus pour en trouver la moyenne.

Notons que si on fait le choix de réduire par convention la durée de la période hivernale autour du solstice, on augmente légèrement l'angle optimal ; par exemple cet angle optimal devient 19° lorsqu'on considère la période hivernale comme allant du 21 octobre au 21 février.

Néanmoins, on peut faire le choix de décaler de quelques degrés vers le bas l'angle de façon à augmenter l'écart d'éclairement entre été et hiver, quitte à être légèrement sous-optimal en hiver, ou optimal sur une période plus courte.

De même, on peut faire le choix de décaler de quelques degrés vers le haut l'angle. Il peut y avoir un intérêt à cette légère dégradation de l'optimum. Un cas est présenté plus loin où l'on constate que cela permet dans certaines options de mise en œuvre de limiter l'épaisseur de la lame (8).

Il est nécessaire d'être relativement précis sur cet angle définissant l'inclinaison transverse des lames. En effet, 5° d'erreur induit déjà une ombre portée (19) de 9% de la surface de la lame (8).

Au final, un bon fonctionnement de ce système de persiennes nécessitera d'orienter la largeur de la lame (8) selon une orientation qui sera choisie entre 12 et 24° en dessous de la direction de l'équateur.

Pour illustration, le tableau suivant donne l'inclinaison transverse, en fonction de la latitude $\lambda$ du bâtiment (1) et de l'orientation B de la surface (2) considérée, dans le cas le plus courant, de surfaces (2) installées de façon verticale (exemple : baies vitrées). Pour être utilisable de façon pratique, ce tableau donne l'angle avec comme référence 0 la direction normale à la surface :

| Latitude du bâtimen t | Orientation surface | sud | 15° W | 30° W | 45° W | 60° W | 75° W | 90° W | 105° W |
|---|---|---|---|---|---|---|---|---|---|
| 30° | Inclinaison transverse (visée 18° sous le plan de l'équateur) | 42° | 49° | 31° | 20° | 8° | -5° | -18° | -31 ° |
| 40° | | 32° | 30° | 24° | 15° | 5° | -7° | -18° | -29° |
| 45° | | 27° | 25° | 20° | 12° | 3° | -7° | -18° | -29° |
| 50° | | 22° | 20° | 15° | 9° | 1° | -8° | -18° | -28° |
| 60° | | 12° | 11° | 8° | 3° | -4° | 11° | -18° | -25° |

La convention de signe est telle qu'un signe positif corresponde à une lame orientée vers le haut lorsqu'on regarde à travers le système de persiennes depuis l'intérieur du bâtiment.

Le tableau fournit uniquement les valeurs pour les surfaces orientées partiellement à l'ouest. Elles sont identiques pour les orientations est. Dans le cas général, on cherchera une inclinaison de 12° à 24° en dessous de la direction de l'équateur, et on reliera la direction de l'équateur avec la normale au système de persiennes en calculant la direction E donnée ci-dessus.

Le paragraphe suivant décrit les performances de l'invention par rapport à l'état de l'art :

A ce stade, il est facile de comparer la solution apportée par la présente invention, comparée à l'état de l'art, notamment par rapport au brevet US6105318A. Celui-ci définit un angle dit « slope », équivalent à l'angle d'inclinaison longitudinale tel que défini ci-dessus, et un angle de « tilt », équivalent à l'angle d'inclinaison transverse tel que défini ci-dessus. Partant de l'idée que tous les plans de lames de persiennes doivent être parallèles à un plan commun, l'auteur arrive à une formule donnée par les équations dites « Eq. A » énoncées à la colonne 7, et reprises aux revendications 6 et 16. La présente invention donne des valeurs égales ou proches uniquement pour l'orientation plein Sud, pour laquelle angle d'inclinaison longitudinale et « slope » sont égaux à zéro, et l'angle d'inclinaison transverse et « tilt » sont proches, de l'ordre d'une vingtaine de degrés pour un bâtiment situé à une latitude de 45°. Or cette orientation plein sud peut être considérée comme faisant partie de l'état de l'art antérieur. Dès que l'orientation est différente du plein sud, les deux inventions fournissent des solutions sensiblement différentes. Dès 15° d'orientation à l'ouest par exemple, les solutions diffèrent d'une dizaine de degrés en inclinaison longitudinale, et cet écart ne fait qu'augmenter lorsque la surface s'écarte du sud. Pour une fenêtre plein ouest à 40° de latitude par exemple, les deux inventions diffèrent de 24° en inclinaison longitudinale, et de 12 à 24° en inclinaison transverse. En reprenant cet exemple pris justement dans le brevet US6105318A aux colonnes 10, 11 et 12 du brevet, l'efficacité apportée par la présente invention est telle qu'en hiver plus de 95% du flux entrant à 16h est transmis à la fenêtre (les pertes étant essentiellement dues à l'ombre portée de l'épaisseur des lames), au lieu de 61% tel que décrit dans le brevet américain. Cette efficacité mitigée incite l'auteur à adapter ses valeurs de slope et de tilt, mais au prix d'une dégradation de l'opacité en été. Cette adaptation n'est pas nécessaire avec la présente invention, et l'opacité en été reste totale à toute heure de l'après-midi pour une fenêtre orientée ouest au solstice d'été. L'auteur évoque également un deuxième jeu d'équation « Eq. B. » présents dans la description, mais non repris dans les revendications. Ce deuxième jeu d'équation empirique est lui-même encore significativement éloigné de la solution optimale proposée ici (presque 15° d'écart dans l'exemple pris ci-dessus).

Dans une variante de l'invention, l'inclinaison transverse peut alternativement être définie comme expliqué ci-dessous :

Pour des surfaces (2) ne recevant de toute façon que très peu de flux direct l'hiver, par exemple des vitres de toit au nord, ou des baies vitrées orientées nord-est ou nord-ouest, il est possible de faire un choix radicalement différent concernant l'angle d'inclinaison transverse, c'est-à-dire de choisir au contraire un angle largement au-dessus de la direction de l'équateur, de façon à simplement se protéger du soleil d'été.

Une variante de l'invention consiste donc à orienter la largeur de la lame (8) significativement au-dessus de la direction du plan de l'équateur. La valeur de 50° au-dessus de la direction du plan de l'équateur par exemple permet d'avoir un angle de 26° de séparation avec la direction du soleil le jour du solstice d'été, ce qui est probablement le minimum acceptable pour un fonctionnement adéquat du dispositif. Toute valeur supérieure est acceptable. En particulier une orientation strictement normale à la surface protégée par une persienne pourra être avantageusement sélectionnée si la condition de séparation au plan de l'équateur exprimée ci-dessus est satisfaite, car elle maximisera l'éclairement indirect apporté par l'ouverture tout en limitant le flux direct d'été.

Dans une autre variante de l'invention, l'inclinaison transverse des lames peut être ajustée, comme expliqué ci-après :

La période hivernale n'est pas strictement centrée sur le solstice. Le pic de froid hivernal arrive plusieurs semaines après le solstice d'hiver, le nombre de semaines dépendant légèrement du climat de la zone géographique du bâtiment. De même, le pic de chaleur arrive plusieurs semaines après le solstice d'été.

Ces décalages constituent une difficulté pour des systèmes de persiennes fixes, puisque ces systèmes sont exclusivement liés à la direction du soleil, et donc leurs performances sont donc symétriques autour des solstices d'été et d'hiver.

Une variante de l'invention consiste donc à rajouter une capacité d'ajustement de façon à s'affranchir de cette asymétrie du climat.

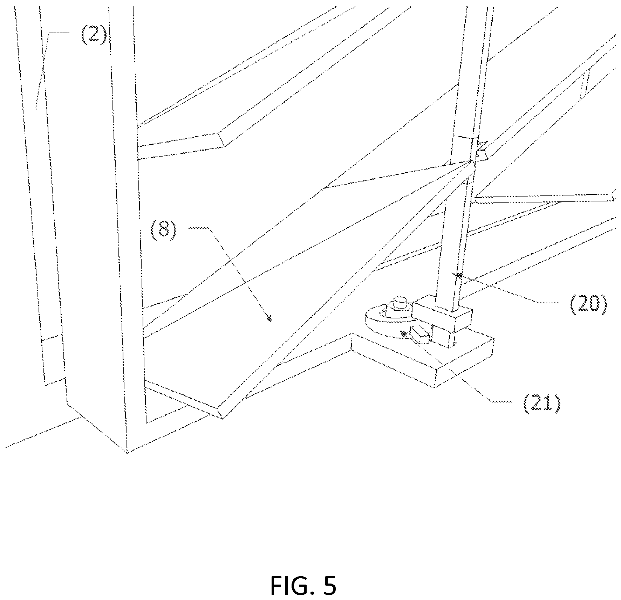

L'ajustement saisonnier doit se faire idéalement sur l'inclinaison transverse des lames (8). Une capacité d'ajustement de quelques degrés est suffisante pour faire disparaitre complètement le défaut d'asymétrie expliqué ci-dessus. Nous nous intéressons ici à la méthode la plus simple pour permettre cet ajustement qui consiste à jouer sur la flexibilité des lames (8). Cette méthode permet de s'affranchir de tout réel mécanisme, ce qui est une des motivations premières de cette invention. Pour appliquer cette méthode on pourra notamment faire usage d'une ou plusieurs pièces longilignes (20), tringles ou câbles tendus, croisant chaque lame (8) et fixé à chacune d'entre elles. Ces tringles ou câbles tendus (20) permettent d'ajuster l'inclinaison transverse en jouant sur la flexibilité transverse des lames (8), via un calage de ces pièces longilignes. Ce calage pourra être redéfini de façon saisonnière. Dans la figure 5, on propose une mise en oeuvre de cette variante. Dans cet exemple les pièces longilignes (20) sont des tringles calées par un dispositif rotatif (21).

Une autre façon d'ajuster l'inclinaison transverse consiste à mettre en œuvre un système de persiennes rigide, et de mettre en place un ajustement de la structure portante (9) de façon à incliner globalement le système de persiennes de telle sorte qu'il ne soit plus parallèle à la surface (2), mais légèrement incliné par rapport à celle-ci. Cette mise en œuvre d'ajustement est susceptible de modifier à la fois l'orientation longitudinale et l'orientation transverse, mais cette méthode reste très efficace, principalement parce que le bon fonctionnement de l'invention est relativement tolérant à une inclinaison longitudinale qui s'éloigne quelque peu de l'inclinaison optimale décrite ci-dessus.

Quoi que ce ne soit pas une des motivations premières de l'invention, une variante de l'invention consiste à ajuster mécaniquement l'inclinaison transverse des lames ou structures lamellaire (8) grâce à une ou plusieurs articulations installée(s) sur chaque structure lamellaire. Le système d'articulation lui-même sera défini selon l'état de l'art. Il pourra notamment être motorisé ou pas.

Grâce à ces articulations, il est possible de procéder à l'ajustement saisonnier de l'inclinaison transverse des lames. Il est également possible de fermer au maximum les persiennes en les rabattant de façon à ce que l'inclinaison transverse des lames soit telle qu'elles soient le plus parallèle possible à la surface (2).

Bien que ce dispositif ne simplifie pas notablement la mise en œuvre de persiennes extérieures par rapport à l'état de l'art, il possède tout de même l'avantage pour l'utilisateur de donner un réglage de l'éclairement solaire qui soit persistant au cours de la journée. Il permet en outre l'ajustement saisonnier lié au décalage des pics de température par rapport au solstice. Enfin il permet également d'obturer complètement la surface (2).

Le ratio entre le pas entre les lames et largeur des lames est discutée ci-après :

C'est ce ratio qui va permettre d'optimiser la protection solaire de la surface l'été. La présente invention ne fige absolument pas ce ratio qui peut être choisi librement par le fabricant en fonction de son besoin de protection l'été. Notons que pour un système de persiennes dont l'orientation est optimale en terme d'éclairement l'hiver (c'est-à-dire inclinaison longitudinale des lames conforme aux règles définies ci-dessus, et une inclinaison transverse des lames d'environ 18° en dessous de la direction du plan équatorial), un ratio pas /largeur égal à 1 permet de réduire de 80% le flux solaire le jour du solstice d'été (pour une orientation typiquement Sud-Ouest ou Sud-Est de la Surface (2) ). Un ratio plus faible permet d'augmenter cette protection et de l'étendre dans le temps au cours de l'été. Notons également que la protection engendrée par le ratio doit être recalculé pour chaque système de persiennes, en fonction de la latitude λ du bâtiment (1), de l'orientation de la surface (2) considérée, et des caractéristiques géométriques majeures du système de persiennes, telles que définies ci-dessus.

Certains choix de conception des structures lamellaires sont précisés ci-après, et constituent une variante de l'invention :

Lorsque ce système est appliqué à des vitrages, il peut paraître dommageable pour le confort visuel des personnes situées à l'intérieur du bâtiment d'avoir le système de persiennes qui bouche la vue de l'extérieur, à l'exception des trajectoires du soleil l'hiver. Cet inconvénient peut être en grande partie levé grâce à l'amélioration suivante : Plutôt qu'un système de persiennes constitué d'une claie de simples lames, la fonction de lame peut être notablement approchée en décomposant celle-ci en plusieurs éléments distincts (10). Plutôt que 'lames' on utilisera donc dorénavant l'expression 'structure lamellaire'. Ces éléments distincts seront longilignes, c'est à dire des objets qui s'étendent suivant la direction de la longueur des structures lamellaires et maintenus entre eux par une ou plusieurs pièces de fixation (11) de façon à respecter les caractéristiques géométriques décrites ci-dessus. Ces éléments auront une épaisseur physique non-nulle - l'épaisseur étant définie comme la direction orthogonale aux directions de longueur et de largeur de la structure lamellaire, et leur répartition dans le sens de la largeur de la structure lamellaire permettra d'arrêter significativement les rayons directs (15) du soleil pendant l'été. En revanche, il laissera passer de la lumière indirecte venant des directions situées au-dessus des trajectoires d'été du soleil (14).

L'épaisseur de ces éléments est primordiale pour arrêter correctement les rayons directs (15) du soleil en trajectoire d'été. Si on considère qu'il y a environ 36° d'écart entre une trajectoire d'hiver moyenne (13) et une trajectoire d'été moyenne (14) à l'heure de l'éclairement maximal $h_{max}$, et si l'on considère par ailleurs que la structure lamellaire est inclinée transversalement de 18° en dessous de la direction de l'équateur, alors le ratio entre l'épaisseur de ces éléments longilignes et leur espacement dans le sens de la largeur devra être au moins de :

$$e/d = \sin(36°) = 0,588$$

pour être parfaitement opaque aux rayons directs l'été.

Si la structure lamellaire a été inclinée transversalement à l'angle le moins bas recommandée ci-dessus, c'est à dire 12° en dessous de la direction du plan de l'équateur et si l'on tolère que 40% du rayonnement solaire incident pénètre entre deux éléments longilignes (10) le jour du solstice d'été, c'est à dire une opacité de 60%, alors le ratio entre l'épaisseur de ces éléments longilignes et leur espacement dans le sens de la largeur devra être au moins de

$$e/d = 60\%.\sin(23.5°+12°) = 0,35$$

pour avoir l'opacité voulue. Cette valeur constitue l'épaisseur minimale des éléments longilignes (10) par rapport à la distance entre ces éléments dans le sens de la largeur de la structure lamellaire. On voit dans ce cas que l'on a éventuellement intérêt à biaiser vers le haut l'inclinaison transverse des lames, dans cet exemple à 12° en dessous de la direction du plan de l'équateur terrestre, c'est-à-dire dégrader la capacité du système de persiennes à laisser passer les rayons directs l'hiver, afin de garder une bonne protection l'été tout en gardant des structures lamellaires de faible épaisseur.

La présente invention laisse toute liberté quant à la forme de coupe de ces éléments longilignes (10), ils pourront être notamment rectangulaires, plats, circulaires. Certaines formes sont particulièrement intéressantes, on s'intéressera en particulier à une coupe de forme rectiligne. Il est évident que l'utilisation optimale de cette forme, c'est à dire celle qui bloque le mieux les rayons directs (15) du soleil en trajectoire d'été, tout en laissant rentrer le maximum de lumière indirecte, consiste à l'orienter perpendiculairement à cette trajectoire. On s'intéressera ci-après à une autre utilisation de cette même forme. De même, les matériaux constituant ces éléments ne sont pas spécifiés, on les choisira selon les règles de l'art.

Une autre façon d'améliorer l'invention par rapport au problème soulevé dans la section ci-dessus consiste à conserver des lames en une seule pièce, mais à l'ajourer dans son épaisseur. Les règles reliant la largeur des trous et l'épaisseur de la lame sont identiques à celles définissant le ratio e/d telles que définies ci-dessus.

Dans une variante de l'invention la surface des vitres peut être utilisée comme support de l'invention, comme expliqué ci-après :

Dans le cas particulier de mise en œuvre de l'invention discuté à présent, on se limitera au cas où la surface (2) protégée d'un système de persiennes est un vitrage. Ce vitrage pourra être composé d'une vitre simple, soit préférentiellement d'une double vitre ou d'une triple vitre, selon les dispositions de l'état de l'art.

Dans ce cas particulier de l'invention, il peut être particulièrement avantageux d'utiliser comme support du système de persienne une ou plusieurs des vitres (12) elles-mêmes. L'utilisation d'éléments longilignes (10) est particulièrement adaptée à cette variante. En effet, les structures lamellaires (8) ont leur direction longitudinale incluse dans le plan des vitres du vitrage. La direction de la largeur est, quant à elle, hors plan. La séparation en éléments longilignes (10) dans la direction hors plan permet donc d'utiliser directement les vitres comme support des éléments longilignes, ou tout au moins d'une partie de ceux-ci.

On notera que le dispositif de persiennes est d'autant plus pertinent qu'il est disposé le plus possible à l'extérieur du vitrage, puisque la lumière absorbée ou réfléchie par le dispositif sera avantageusement rejetée à l'extérieur du bâtiment pendant la saison d'été. On choisira donc préférentiellement les vitres extérieures d'un double ou triple vitrage pour installer ces éléments longilignes (10).

Dans le cas particulier où les rayons lumineux ont à traverser une vitre pour passer d'un élément longiligne au suivant au sein d'une structure lamellaire, on corrigera la position relative des éléments longilignes successifs des effets de réfraction dus à la traversée des rayons lumineux du soleil à travers la ou les vitres les séparant, pour une direction du soleil correspondant au cas hiver, c'est à dire positionné entre 12 et 24° en dessous de la direction du plan de l'équateur. De cette façon, on conservera l'optimalité de l'arrangement géométrique décrit dans cette invention.

Cette utilisation des vitres (12) comme support permet en particulier une mise en œuvre particulièrement simple du dispositif, en choisissant les dits éléments longilignes (10) comme un simple film opaque, de forme d'une ligne allongée, la longueur de cette ligne étant définie comme le sens de la longueur des structures lamellaires, et l'épaisseur de cette ligne étant choisie en fonction de l'espacement avec les autres éléments longilignes d'une même structure lamellaire, selon les recommandations géométriques données ci-dessus. L'ensemble forme donc une série de raies disposées sur les surfaces d'une ou plusieurs vitres (12).

Ce film opaque peut être installé sur la vitre par collage, par peinture ou par dépôt. Les films opaques seront avantageusement réfléchissants ou blancs de façon à faire renvoyer vers l'extérieur l'énergie solaire bloquée par ceux-ci.

Au maximum, une structure lamellaire (8) sera constituée d'un nombre de films opaques constituants des éléments longilignes (10) égal à deux fois le nombre de vitres (12), c'est à dire 2 pour un simple vitrage, 4 pour un double vitrage, et 6 pour un triple vitrage. Néanmoins pour que le dispositif soit efficace en été, il est préférable que ces films soient disposés le plus possible à l'extérieur du vitrage. On évitera donc si possible d'en disposer sur les vitres intérieures.

Dans le cas d'un triple vitrage par exemple, on pourra choisir d'installer ces films opaques à l'intérieur de la vitre extérieure et sur la vitre centrale. Ce choix, même s'il est moins efficace que de disposer des films opaques sur la face extérieure du vitrage présente l'avantage de ne pas gêner les éventuelles opérations d'entretien sur les vitres et d'être moins vulnérable aux intempéries.

D'autres éléments longilignes (10) non constitués de films pourront être ajoutés au dispositif pour améliorer son efficacité en été. Ceux-ci pourront être à l'extérieur du vitrage, ou bien dans les zones inter-vitres d'un vitrage multiple, double vitrage ou triple vitrage.

Dans une autre variante proche de l'invention, on apposera sur une vitre des films transparents (30) superposés, chacun couvrant la vitre (12), et opacifiés en surface. Les motifs imprimés sur chaque fil transparent sont des lignes orientées selon V (7). Les lignes sur les couches successives seront alignées de façon à ce que les lignes constituent une structure laminaire telle que décrit précédemment. La largeur des lignes imprimées sera directement en rapport avec l'épaisseur des films servant de support. Selon la description ci-dessus, la largeur des lignes devra être au minimum de 35% de l'épaisseur du filtre. Le nombre minimum de film transparent permettant l'invention est de 1 (en supposant qu'on puisse l'imprimer des deux côtés). Mais cette variante est particulièrement adaptée à un nombre significatif de films superposés, par exemple 5 films. Cette superposition de films transparents pourra être avantageusement apposée le plus possible à l'extérieur du vitrage, soit sur la surface extérieure directement, soit si cela gène l'entretien ou pour toute autre raison, sur la face interne de la vitre extérieure.

Dans une autre variante de l'invention, on utilisera non pas la surface d'une vitre, mais l'épaisseur de la vitre (12) comme support du système de persiennes, ou de certains de ces constituants. Ainsi en ce que des zones opaques constituant ou faisant partie des structures lamellaires décrites précédemment sont insérées à l'intérieur d'une vitre (12) au moins du vitrage, soit par un élément physique installé lors de la fabrication du vitrage, soit par des techniques d'opacification du dit vitrage.

En particulier, la technologie de gravure laser 3D de vitres en verre ou en plexiglas peut être utilisée. Une implémentation particulièrement efficace de l'invention consiste donc à utiliser la vitre extérieure d'un vitrage comme support à la gravure laser de lames disposées dans l'épaisseur de la vitre et dont la géométrie est définie selon la présente invention. Le motif gravé en 3D dans l'épaisseur du verre représentera soit des lames parallèles dont l'orientation suivra les règles exposées dans cette description d'invention, soit un réseau de lignes épaisses parallèles de direction V (7) dont un alignement reconstitue le motif des structures lamellaires telle que décrites précédemment et reproduites sur toutes la surface de la vitre.

Le système de persienne présenté ci-dessus dans ses différentes variantes autorise un procédé de chauffage d'un bâtiment par utilisation du rayonnement solaire direct comme chauffage principal ou comme complément de chauffage.

Le système de persienne présenté ci-dessus dans ses différentes variantes autorise un procédé de protection saisonnière d'un capteur solaire installé sur un bâtiment (1). Il est particulièrement adapté aux cas où ce capteur solaire est intégré au toit en pente ou à un mur du bâtiment, pour lesquels l'orientation du capteur n'est pas libre mais imposé par le mur ou le toit portant le capteur solaire.

On peut noter que l'ensemble des différentes variantes ci-dessus reposent sur le principe de lames ou structures laminaires disposées avec une inclinaison longitudinale. Ce principe peut dans certains cas s'intégrer dans l'esthétique générale du bâtiment, ou à l'inverse créer des lignes obliques inesthétiques. Une variante permet de facilement s'affranchir de ce problème esthétique tout en respectant le principe général de l'invention. Dans cette variante, on considère effectivement que l'ouverture à protéger du bâtiment est équipé de grandes lames horizontales dans le sens de la longueur, et éventuellement inclinées dans le sens de la largeur, disposées à l'extérieur du bâtiment. On applique alors l'invention non pas à l'ouverture du bâtiment lui même, mais à chaque grande lame horizontale qui devient la surface (2) à laquelle on applique l'invention, selon l'une quelconque des variantes présentées précédemment. La grande lame devient par ce biais fortement opaque aux rayons directs (15) du soleil en trajectoire d'été, et fortement transparente aux rayons directs (14) du soleil en trajectoire d'été. Le dispositif n'est évidemment pas optimal : cette variante est assez peu efficace pour des ouvertures orientées plein est ou plein ouest pour lesquelles le soleil est gênant en été alors que ses rayons sont quasi perpendiculaire à l'ouverture, les grandes lames n'offrant quasiment aucun ombrage. En revanche, elle peut s'avérer un très bon compromis pour des ouvertures orientées sud-est ou sud-ouest.

La même variante peut tout à fait être mise en place avec des grandes lames verticales plutôt qu'horizontales, ou avec toute autre orientation des grandes lames, selon les autres intérêts - techniques ou esthétiques - de l'architecte du bâtiment.

Dans une autre variante de l'invention, dédiée à une mise en oeuvre particulièrement bon marché et légère, on met en œuvre le système de persiennes selon un motif en alvéoles hexagonales allongées, de façon à faire disparaitre l'essentiel des structures portante (9) et/ou (10), et que les lames soient à la fois faciles à assembler et autoportantes. Dans cette variante, chaque lame (8) est constituée d'au moins une feuille et est divisée en sections régulières dans le sens général de la direction longitudinale, de façon que, sur de longues sections, la au moins une feuille soit disposée précisément selon le sens de la direction longitudinale, et sur des courtes sections (41), la au moins une feuille rejoigne la longue section suivante suivant une direction oblique à la direction longitudinale. Les longues sections pourront être avantageusement constituées de deux feuilles collées l'une sur l'autre. Grâce à ce système de persienne disposé en alvéoles allongées, le seul besoin de structure portante (10) est un besoin de système de fixation du système alvéolé.

Dans une autre variante de l'invention, chaque lame (8) est constituée d'un matériau transparent dont au moins une surface est partiellement recouverte de films opaques selon des motifs réguliers permettant d'ajuster l'opacité d'ensemble de la lame (8). Le film opaque peut être imprimé, peint ou déposé sur le matériau transparent. Cette variante présente l'intérêt de mise en œuvre particulièrement bon marché et légère, par exemple avec une lame constituée d'une feuille plane transparente, et l'ajustement de l'opacité permet d'avoir des lames qui ne soient pas parfaitement opaques, ce qui constituerait un inconfort visuel dans le cas d'un système de persiennes installé devant un vitrage. De plus, les motifs opaques réguliers reproduits sur les 2 faces principales, par exemple une succession de lignes et d'interlignes, permettent d'obtenir une opacité variable de la lame selon la direction du soleil. Dans cette variante bas coût et légère, il peut être intéressant de concevoir la structure portante avec des feuilles épaisses transparentes, croisant les lames et assemblées à celles-ci par de simples encoches de part et d'autres, éventuellement fixés par des points de colle.

Dans une autre variante de l'invention chaque lame (8) est constituée d'une feuille formée de telle façon que son plan de coupe perpendiculairement à la direction longitudinale est constitué d'une succession d'au moins une zone(s) dont la pente est inférieure à la pente moyenne correspondant à l'inclinaison transverse (35) et qui est sensiblement perpendiculaire à la direction des rayons solaires pour les trajectoires d'été du soleil (14), et d'au moins une zone(s) dont la pente est supérieure à la pente moyenne correspondant à l'inclinaison transverses (36). Ces zones successives ne sont pas nécessairement symétriques. Ce dispositif permet à la fois de donner de la rigidité à la feuille mince constituant la lame, et d'offrir une très bonne opacité sur la ou les zone(s) (35) sensiblement perpendiculaire aux rayons solaires pour les trajectoires d'été (14), tout en offrant une certaine transparence - utile pour le confort visuel - dans les autres directions. Cette transparence est obtenue soit en utilisant une feuille dans un matériau non opaque, soit en pratiquant des trous dans la surface de la feuille.

La description des dessins est proposée ci-dessous

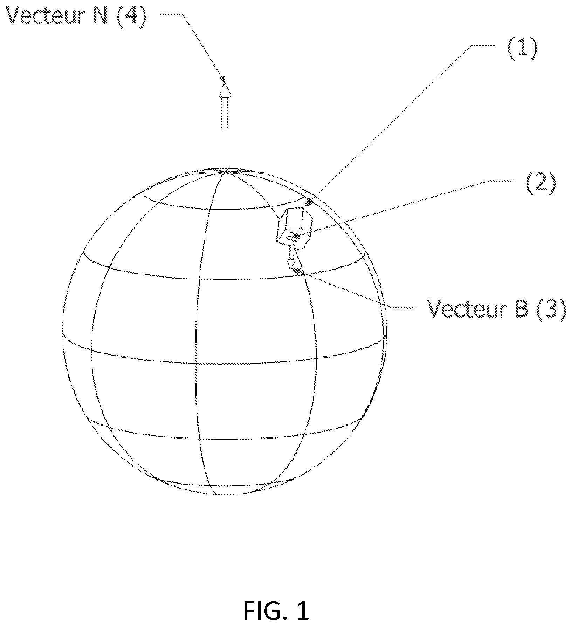

La figure 1 définit à la fois les conditions du problème posé, et présente les éléments géométriques principaux permettant de le résoudre selon l'invention. La sphère du dessin représente le globe terrestre. L'axe de rotation de la Terre est caractérisé par le vecteur **N** (4), vecteur unitaire orienté vers le Nord, qui est par définition perpendiculaire au plan de l'équateur. Le bâtiment (1) est positionné sur le globe à une latitude λ définie comme l'angle allant du plan de l'équateur à la ligne parallèle portant le bâtiment (1). Dans ce bâtiment, il existe une surface (2) que l'on souhaite équiper d'un système de persiennes. Cette surface - par exemple une simple fenêtre - est caractérisée par son vecteur **B** (3), qui est son vecteur unitaire normal à la surface (2) et sortant. La solution au problème posé proposée dans la présente invention consiste à optimiser le système en fonction du vecteur **N** (4) vu depuis le bâtiment, et le vecteur **B** (3) caractérisant la surface.

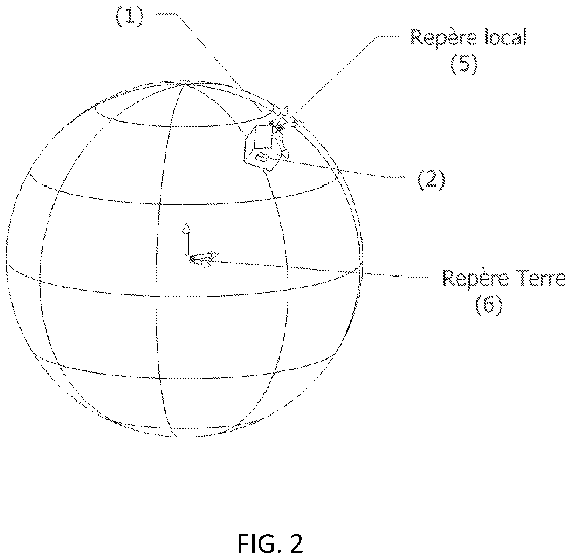

La figure 2 complète la figure 1 en présentant le repère local (5) et le repère Terre (6). Les axes X et Y du repère Terre constitue le plan de l'équateur utilisé à plusieurs reprise dans la description et dans les revendications de l'invention.

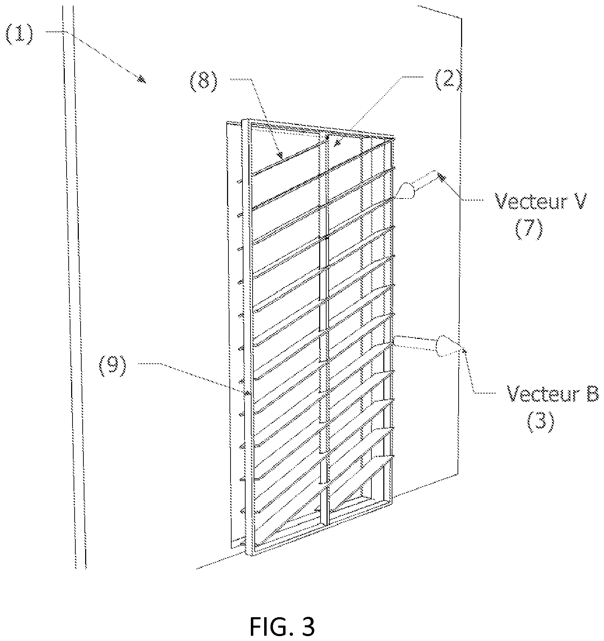

La figure 3 présente la version la plus simple de l'invention constitué d'une simple claie de lames parallèles (8). Un mur du bâtiment (1) est représenté. Une partie de ce mur est constitué d'une surface (2) que l'on souhaite protéger par un système de persiennes. Sont également représentés sur ce dessin le vecteur **B** (3) caractérisant la surface (2), et le vecteur V (7) - résultat du produit vectoriel de **B** (3) et de **N** (4) - qui porte la direction d'intersection entre la surface (2) et le plan de l'équateur. Le système de persiennes est constitué d'un certain nombre de lames (8) parallèles entre elles et inclinées dans le sens de leur longueur selon le vecteur **V** (7). Les lames sont maintenues selon la géométrie voulue grâce à une structure portante (9), constituée d'un certain nombre de montants, 3 verticaux et 2 horizontaux dans l'exemple illustré par cette figure. Dans cet exemple de réalisation les lames (8) sont fixées rigidement à la structure portante (9).

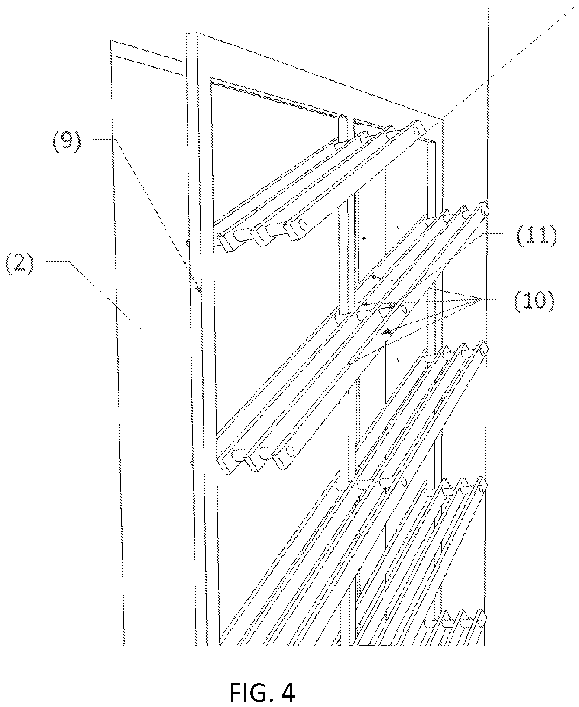

La figure 4 présente une variante de l'invention où les lames (8) sont remplacées par des structures lamellaires composées d'un alignement d'éléments longilignes (10), maintenus ensemble et alignés selon les contraintes géométriques exposées dans cette invention par des éléments de structure (11). Certains éléments de la figure précédente sont reproduits sur ce dessin, comme la surface (2) ou la structure portante du système de persiennes (9).

La figure 5 présente une variante de l'invention telle que présentée sur la figure 3. Dans cette variante, des pièces longilignes (20) permettent un ajustement de l'ouverture des lames (8), en jouant sur la flexibilité de ces dernières. De façon à procéder à ces ajustements saisoniers, une pièce de calage (21) est disposée à l'extrémité de chaque pièce longiligne de façon à ajuster la hauteur des pièces longilignes (20), qui elles-même viennent fléchir les lames (8).

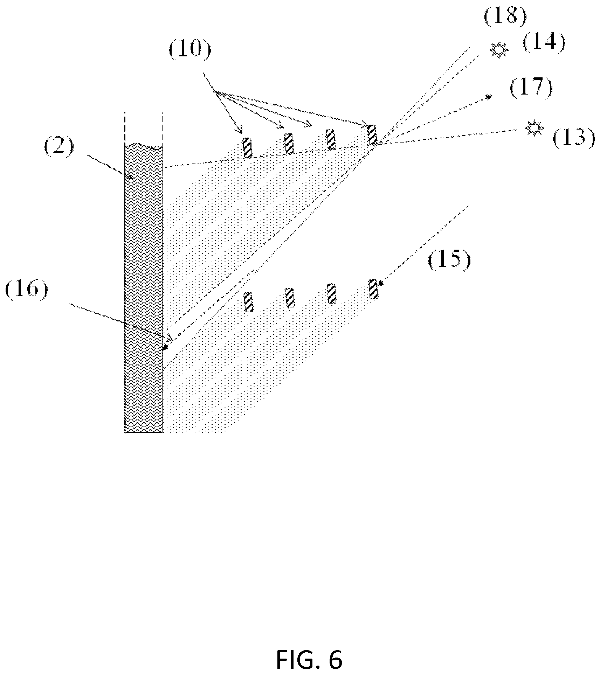

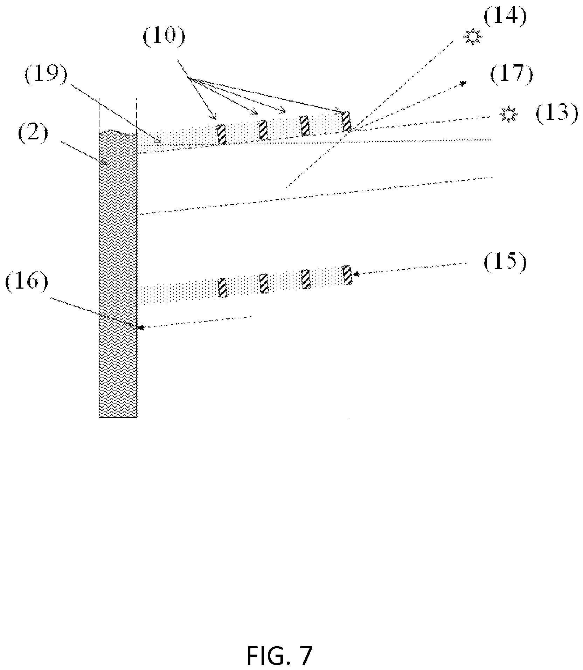

Les figure 6 et 7 présentent le principe géométrique de fonctionnement du système de persiennes illustré à la figure 4. La figure 6 présente le cas été, alors que la figure 7 présente le cas hiver. Les deux figures représentent des coupes du système présenté dans la figure 4, le plan de coupe étant perpendiculaire à la direction portée par le vecteur **V** (7). Certains éléments de la figure 4 sont repris dans les figures 6 et 7 : une vue en coupe des éléments longilignes (10), ainsi que la surface (2). Les autres éléments concernent la géométrie du rayonnement solaire. Sont indiqués sur les deux dessins, la direction du plan de l'équateur (17) vu depuis le plan de coupe. La direction moyenne du soleil pendant la période d'hiver est montrée (13), typiquement 18° en dessous de la direction du plan de l'équateur (17). La direction moyenne du soleil pendant la période d'été est montrée (14), typiquement 18° au-dessus de la direction du plan de l'équateur (17).

Sur la figure (6) la direction extrême du soleil le jour du solstice d'été (18) est indiquée, un peu plus de 23° au-dessus de la direction du plan de l'équateur (17). L'ombrage au rayonnement direct du soleil pour la direction moyenne d'été est indiqué. Les rayons solaires arrêtés par le système de persiennes (15) constituent plus des 2/3 du rayonnement solaire d'été dans cet aménagement, tandis que les rayons solaires (16) atteignant effectivement la surface (2) constituent moins d'un tiers du rayonnement direct.

Sur la figure 7, la direction extrême du soleil le jour du solstice d'hiver (19) est indiquée, un peu plus de 23° en dessous de la direction du plan de l'équateur (17). L'ombrage au rayonnement direct du soleil pour la direction moyenne d'hiver est indiqué. Les rayons solaires arrêtés par le système de persiennes (15) ne constituent plus dans ce cas que moins de 15% du rayonnement solaire d'hiver dans cet aménagement, tandis que les rayons solaires (16) atteignant effectivement la surface (2) constituent plus de 85% du rayonnement direct, pour l'exemple de réalisation illustré sur cette figure. On voit sur ce dessin que l'orientation dans le sens de la largeur de la structure lamellaire (8), et donc de ces différents éléments succéssifs (10) a été conçu tel qu'il soit parallèle à la direction moyenne (13) du soleil pendant la période d'hiver.

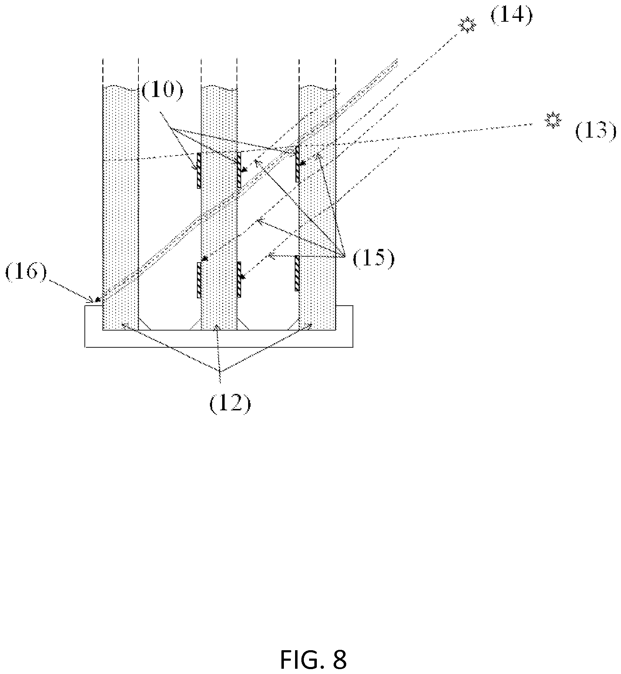

Sur la figure 8 est présentée une variante de l'invention utilisant les vitres (12) constituant le vitrage, plus généralement appelé surface (2) dans cet exposé, comme support aux éléments longilignes (10). Là encore le plan de coupe est perpendiculaire à la direction portée par le vecteur **V** (7). La direction moyenne du soleil pendant la période d'hiver (13) et la direction moyenne du soleil pendant la période d'été (14) sont montrées. Les éléments longilignes (10) sont constitués d'un film déposé sur certaines surfaces de certaines vitres (12). L'alignement des différents éléments longilignes dans le sens de la traversée du vitrage est optimisé en suivant les rayons du soleil pour une direction moyenne du soleil pendant la période d'hiver (13), en prenant soin de bien tenir compte des effets de réfraction lors de la traversée des vitres. Pour une direction moyenne du soleil pendant la période d'été (14), une grande majorité des rayons du soleil (15) sont arrêtés, et une petite minorité des rayons du soleil (16) traversent finalement l'intégralité du vitrage.

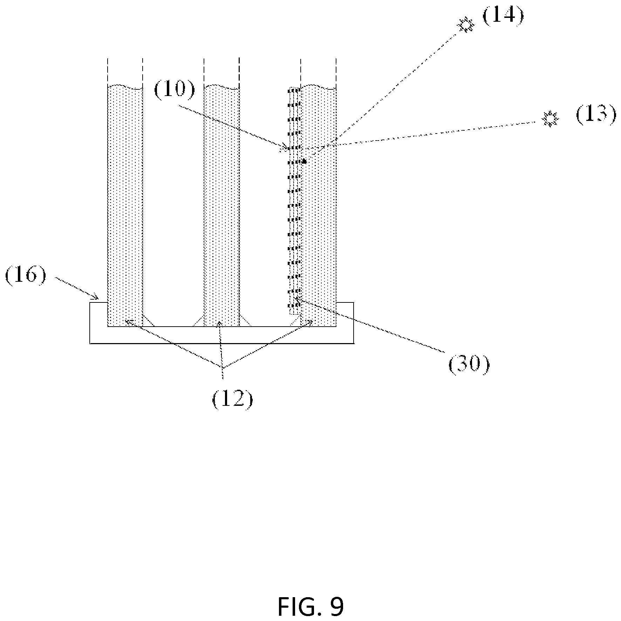

Sur la figure 9 est présentée une variante de l'invention utilisant des films transparents (30) superposés et apposés sur une vitre (12) constituant le vitrage, comme support aux éléments longilignes (10). Là encore le plan de coupe est perpendiculaire à la direction portée par le vecteur **V** (7). La direction moyenne du soleil pendant la période d'hiver (13) et la direction moyenne du soleil pendant la période d'été (14) sont montrées. Les éléments longilignes (10) sont constitués d'une simple impression opaque à la surface du film transparent (30). L'alignement des différents éléments longilignes dans le sens de la traversée du vitrage est optimisé en suivant les rayons du soleil pour une direction moyenne du soleil pendant la période d'hiver (13), en prenant soin de bien tenir compte des effets de réfraction lors de la traversée des films transparents. Le fonctionnement en été et en hiver est tout à fait similaire à celui présenté sur les figures 6 et 7, mais en miniature, l'espacement entre les différents éléments longilignes (10) étant défini par l'épaisseur des films transparents (30).

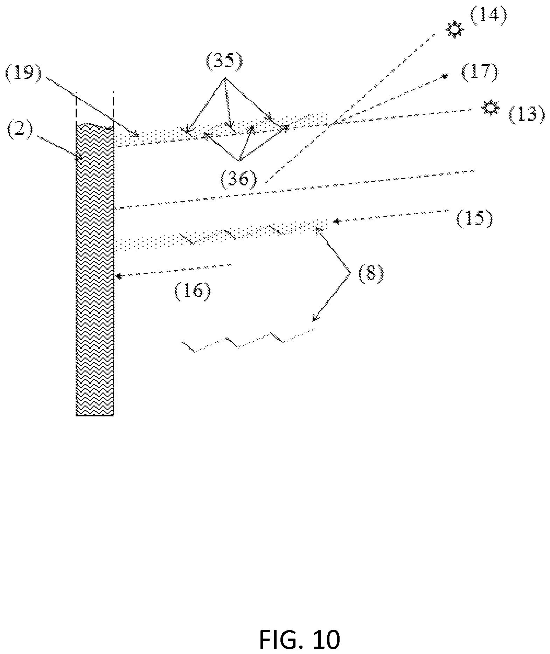

Sur la figure 10 est présentée la variante constituée d'une feuille mince formée de telle façon que son plan de coupe perpendiculairement à la direction longitudinale est constitué d'une succession d'au moins une zone(s) dont la pente est inférieure à la pente moyenne correspondant à l'inclinaison transverses (35) qui est sensiblement perpendiculaire à la direction des rayons solaires pour les trajectoires d'été du soleil (14), et d'au moins une zone(s) dont la pente est supérieure à la pente moyenne correspondant à l'inclinaison transverses (36). La direction moyenne du soleil pendant la période d'hiver (13) et la direction moyenne du soleil pendant la période d'été (14) sont montrées. Les rayons solaires arrêtés par le système de persiennes (15) et les rayons solaires (16) atteignant effectivement la surface (2) sont également représentés sur cette figure.

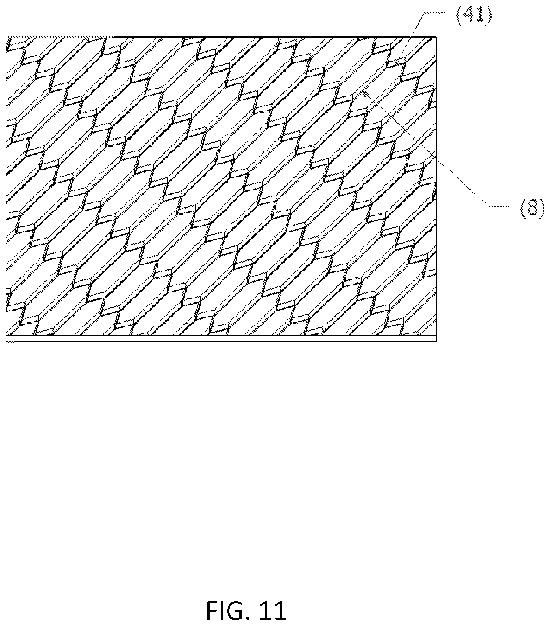

Sur la figure 11 et présentée la variante mise en œuvre selon un motif en alvéoles hexagonales allongées. Chaque lame (8) est constituée d'au moins une feuille mince et est divisée en sections régulières dans le sens général de la direction longitudinale, de façon que sur de longues sections, la feuille soit disposée précisément selon le sens de la direction longitudinale, et sur des courtes sections (41), la feuille rejoigne la longue section suivante suivant une direction oblique à la direction longitudinale.

L'un des modes de réalisation de l'invention est présenté en détail ci-dessous et est illustré par la figure 8 : Prenons l'exemple d'un système de persiennes intégré au vitrage destinées à protéger des baies vitrées de 2,5m par 2m. Au moment de la fabrication de la baie vitrée, l'orientation une fois installée de cette baie vitrée et la latitude du bâtiment destination sont connues, par exemple 60° ouest d'orientation pour un bâtiment construit sur le 45<sup>ème</sup> parallèle ($\lambda$ = 45°).

Si la baie vitrée est un triple-vitrage composée de 3 vitres de chacune 4 mm et espacées de 12 mm, on procédera comme suit :
Sur la face interne de la vitre extérieure et sur les deux faces de la vitre centrale, des films réfléchissants (10) sont apposés. Ces films se présentent sous la forme de fines bandes métallisées de 6mm de large inclinées de 38° par rapport à l'horizontale et espacées tous les 20 mm. Les bandes sont positionnées de façon sensiblement identiques sur les 3 faces sur lesquelles elles sont installées, y compris leur calage par rapport à la verticale, puisque pour cette orientation et cette latitude, l'inclinaison transverse est proche de 0°.

Cette mise en oeuvre laisse rentrer 70% du rayonnement direct en hiver, et ne laisse rentrer que 30% de celui-ci l'été.

## Revendications

1. Dispositif de pare-soleil pour une surface plane (2) d'un bâtiment (1), composé d'une série de lames ou structures lamellaires (8) globalement parallèles couvrant la totalité ou une large partie de la dite surface (2), **caractérisé en ce que** chaque lame ou structure lamellaire (8) présente une inclinaison longitudinale parallèle à l'axe défini par un vecteur V = B ^ N, où B est un vecteur normal à la surface (2) et N est le vecteur indiquant l'axe de rotation de la Terre, orienté vers le Nord.

2. Dispositif selon la revendication 1, **caractérisé en ce que** les lames ou structures lamellaires (8) sont inclinées transversalement selon un angle défini en fonction de la latitude terrestre de l'emplacement du dit bâtiment (1) et l'orientation de la dite surface (2), et **en ce que** cet angle est choisi entre 12 et 24° en dessous de la direction du plan de l'équateur terrestre, la rotation étant comptée autour de la direction longitudinale des lames ou structures lamellaires (8).

3. Dispositif selon la revendication 1, **caractérisé en ce que** les lames ou structures lamellaires sont inclinées transversalement selon un angle défini en fonction de la latitude terrestre de l'emplacement du dit bâtiment (1) et l'orientation de la dite surface (2), et **en ce que** cet angle est choisi supérieur à 50° au-dessus de la direction du plan de l'équateur terrestre, la rotation étant comptée autour de la direction longitudinale des lames ou structures lamellaires (8).

4. Dispositif selon la revendication 2 ou 3 dont les lames ou structures lamellaires (8) sont maintenues entre elles par une structure porteuse (9), **caractérisé en ce qu'**une ou plusieurs pièces longilignes (20) croisant chaque lame ou structure lamellaire (8) et fixée(s) à chacune d'entre elles permettent d'ajuster l'inclinaison transverse des lames ou structures lamellaires (8) lames en jouant sur leur flexibilité en largeur, via un calage de ces pièces longilignes (20).

5. Dispositif selon la revendication 1, **caractérisé en ce qu'**une ou plusieurs articulations permettent l'ajustement sur commande de l'inclinaison transverse des lames ou structures lamellaires.

6. Dispositif selon la revendication 2 ou 3, **caractérisé en ce que** les structures lamellaires (8) sont constituées de 2 ou plus éléments longilignes distincts (10) maintenus ensemble alignés dans le sens de la largeur, et dont l'épaisseur est au moins égale à 0,35 fois la distance séparant 2 éléments consécutifs de cette structure.

7. Dispositif selon la revendication 6 appliqué à un vitrage, **caractérisé en ce que** un ou plusieurs des éléments longilignes (10) sont fixés à une ou plusieurs vitres d'un vitrage et **en ce que** l'inclinaison transverse des structures lamellaires (8) est corrigée des effets de réfraction dus à la traversée des rayons lumineux du soleil à travers la ou les vitres séparant les éléments longilignes (10) d'une même structure lamellaire, pour une direction du soleil correspondant au cas hiver (13), c'est à dire positionné entre 12 et 24° en dessous de la direction du plan de l'équateur terrestre.

8. Dispositif selon la revendication 7 caractérisé que l'un au moins des éléments longilignes (10) est constitué d'un film opaque apposé à la surface de la vitre.

9. Dispositif selon la revendication 7, **caractérisé en ce que** les éléments longilignes (10) sont des lignes imprimées soit sur les surfaces d'un film transparent (30) apposé à la surface de la vitre, soit sur les surfaces de plusieurs films transparents superposés (30) apposés à la surface de la vitre.

10. Dispositif selon l'une quelconque des revendications précédentes appliqué à un vitrage, **caractérisé en ce que** des zones opaques constituant ou faisant partie des structures lamellaires (8) sont insérées à l'intérieur d'une vitre au moins du vitrage, soit par un élément physique installé lors de la fabrication du matériau du vitrage, soit par des techniques d'opacification de points positionnés en 3D à l'intérieur du dit vitrage, et selon une géométrie définie aux revendications précédentes corrigée des effets de réfraction pour l'orientation de la largeur des lames.

11. Dispositif selon l'une quelconque des revendications précédentes utilisé comme pare-soleil d'une ouverture d'un bâtiment (1), **caractérisé en ce qu'**il s'applique à une surface (2) qui est non pas la dite ouverture du bâtiment, mais à des grandes lames horizontales dans le sens de la longueur, équipant l'ouverture à protéger.

12. Dispositif selon la revendication 1, caractérisé en ce chaque lame n'est pas mince en épaisseur et en ce que l'ensemble des lames du dispositif constituent un bardage en claire-voie pour la surface du bâtiment.

13. Dispositif selon la revendication 1, caractérisé en ce chaque lame (8) est constituée d'au moins une feuille et est divisée en sections régulières dans le sens général de la direction longitudinale, de façon que, sur de longues sections, la au moins une feuille soit disposée précisément selon le sens de la direction longitudinale, et sur des courtes sections (41), la au moins une feuille rejoigne la longue section suivante suivant une direction oblique à la direction longitudinale.

14. Dispositif selon la revendication 1, caractérisé en ce chaque lame (8) est constituée d'un matériau transparent dont au moins une surface est partiellement recouverte de films opaques selon des motifs réguliers.

15. Dispositif selon la revendication 2, caractérisé en ce chaque lame (8) est constituée d'une feuille formée de telle façon que son plan de coupe perpendiculairement à la direction longitudinale est constitué d'une succession d'au moins une zone(s) (35) dont la pente est inférieure à la pente moyenne correspondant à l'inclinaison transverses et sensiblement perpendiculaire à la direction des rayons solaires pour les trajectoires d'été du soleil (14), et d'au moins une zone(s) (36) dont la pente est supérieure à la pente moyenne correspondant à l'inclinaison transverses

**Patentansprüche**

1. Sonnenschutzvorrichtung für eine ebene Fläche (2) eines Gebäudes (1), die aus einer Reihe allgemein paralleler Lamellen oder lamellarer Strukturen (8) zusammengesetzt ist, die die Gesamtheit oder einen großen Teil der Fläche (2) bedecken, **dadurch gekennzeichnet, dass** jede Lamelle oder lamellare Struktur (8) eine Längsneigung parallel zu der Achse hat, die von einem Vektor V = B^N festgelegt ist, wobei B ein zu der Fläche (2) Normalenvektor ist und N der nach Norden gerichtete Vektor ist, der die Rotationsachse der Erde anzeigt.

2. Vorrichtung nach Anspruch 1, **dadurch gekennzeichnet, dass** die Lamellen oder lamellaren Strukturen (8) gemäß einem Winkel, der in Abhängigkeit vom Breitengrad der Erde an der Stelle des Gebäudes (1) und der Ausrichtung der Fläche (2) definiert ist, transversal geneigt sind und dass dieser Winkel zwischen 12 und 24° unter der Ausrichtung der Ebene des Erdäquators ausgewählt ist, wobei die Rotation um die Längsrichtung der Lamellen oder lamellaren Strukturen (8) berücksichtigt wird.

3. Vorrichtung nach Anspruch 1, **dadurch gekennzeichnet, dass** die Lamellen oder lamellaren Strukturen gemäß einem Winkel, der in Abhängigkeit vom Breitengrad der Erde an der Stelle des Gebäudes (1) und der Ausrichtung der Fläche (2) definiert ist, transversal geneigt sind und dass dieser Winkel über 50° über der Ausrichtung der Ebene des Erdäquators ausgewählt ist, wobei die Rotation um die Längsrichtung der Lamellen oder lamellaren Strukturen (8) berücksichtigt wird.

4. Vorrichtung nach Anspruch 2 oder 3, deren Lamellen oder lamellare Strukturen (8) untereinander durch eine tragende Struktur (9) gehalten werden, **dadurch gekennzeichnet, dass** ein oder mehrere längliche Teile (20), die jede Lamelle oder lamellenartige Struktur (8) kreuzen und an jeder von ihnen befestigt sind, gestatten, die Querneigung der Lamellen oder lamellaren Strukturen (8) durch Nutzung ihrer Flexibilität in der Breite über eine Verkeilung dieser länglichen Teile (20) einzustellen.

5. Vorrichtung nach Anspruch 1, **dadurch gekennzeichnet, dass** eine oder mehrere Gelenke die Einstellung durch Steuern der Querneigung der Lamellen oder lamellaren Strukturen gestatten.

6. Vorrichtung nach Anspruch 2 oder 3, **dadurch gekennzeichnet, dass** die lamellaren Strukturen (8) aus zwei oder mehreren unterschiedlichen länglichen Elementen (10) bestehen, die gemeinsam in Richtung der Breite fluchtend gehalten werden und deren Breite mindestens gleich 0,35 Mal der Abstand ist, der zwei aufeinanderfolgende Elemente dieser Struktur trennt.

7. Vorrichtung nach Anspruch 6, angewendet auf eine Verglasung, **dadurch gekennzeichnet, dass** ein oder mehrere der länglichen Elemente (10) an einer oder mehreren Scheiben einer Verglasung befestigt sind und dass die Querneigung der lamellaren Strukturen (8) um Refraktionseffekte korrigiert wird, die dem Durchgang der Lichtstrahlen der Sonne durch die Scheibe(n) geschuldet sind, die die länglichen Elemente (10) derselben lamellaren Struktur trennen, für eine Richtung der Sonne, die dem Fall Winter (13) entspricht, das heißt, zwischen 12 und 24° unter der Richtung der Ebene des Erdäquators, positioniert ist.

8. Vorrichtung nach Anspruch 7, **dadurch gekennzeichnet, dass** mindestens eins der länglichen Elemente (10) von einer lichtdichten Folie gebildet ist, die auf der Fläche der Scheibe aufgebracht ist.

9. Vorrichtung nach Anspruch 7, **dadurch gekennzeichnet, dass** die länglichen Elemente (10) Linien sind, die entweder auf die Flächen einer transparenten Folie (30), die auf der Fläche der Scheibe aufgebracht ist, oder auf die Flächen mehrerer übereinanderliegender transparenter Folien (30), die auf die Fläche der Scheibe aufgebracht sind, gedruckt sind.

10. Vorrichtung nach einem der vorangehenden Ansprüche, angewendet auf eine Verglasung, **dadurch gekennzeichnet, dass** lichtdichte Zonen, die lamellare Strukturen (8) bilden oder deren Teil sind, in das Innere mindestens einer Scheibe der Verglasung eingesetzt sind, entweder anhand eines physischen Elements, das bei der Herstellung des Materials der Verglasung installiert wird, oder anhand von Trübungstechniken von Punkten, die in 3D im Inneren der Verglasung positioniert sind, und gemäß einer Geometrie, die in den vorangehenden Ansprüchen definiert ist, korrigiert um die Refraktionseffekte für die Ausrichtung der Breite der Lamellen.

11. Vorrichtung nach einem der vorangehenden Ansprüche, die als Sonnenschutz einer Öffnung eines Gebäudes (1) verwendet wird, **dadurch gekennzeichnet, dass** sie auf eine Fläche (2) angewendet wird, die nicht die Öffnung des Gebäudes ist, sondern auf große horizontale Lamellen in der Längsrichtung, die die zu schützende Öffnung ausstatten.

12. Vorrichtung nach Anspruch 1, **dadurch gekennzeichnet, dass** jede Lamelle in der Breite nicht dünn ist und dass die Gesamtheit der Lamellen der Vorrichtung eine Verkleidung mit Durchbrüchen für die Fläche des Gebäudes bildet.

13. Vorrichtung nach Anspruch 1, **dadurch gekennzeichnet, dass** jede Lamelle (8) aus mindestens einer Folie besteht und in der allgemeinen Richtung der Längsrichtung in gleichmäßige Abschnitte unterteilt ist, so dass auf langen Abschnitten die mindestens eine Folie genau in der Richtung der Längsrichtung positioniert ist und auf kurzen Abschnitten (41) die mindestens eine Folie den nächsten langen Abschnitt gemäß einer schrägen Richtung zur Längsrichtung erreicht.

14. Vorrichtung nach Anspruch 1, **dadurch gekennzeichnet, dass** jede Lamelle (8) aus einem transparenten Material besteht, dessen mindestens eine Fläche teilweise mit lichtdichten Folien in gleichmäßigen Motiven bedeckt ist.

15. Vorrichtung nach Anspruch 2, **dadurch gekennzeichnet, dass** jede Lamelle (8) aus einer Folie besteht, die derart gebildet ist, dass ihre Schnittebene senkrecht zur Längsrichtung aus einer Abfolge von mindestens einer Zone(n) (35) besteht, deren Schräge kleiner als die mittlere Schräge ist, die der Querneigung entspricht, und etwa senkrecht zur Richtung der Sonnenstrahlen für die Sommertrajektorien der Sonne (14), und von mindestens einer Zone(n) (36), deren Schräge größer als die mittlere Schräge ist, die der Querneigung entspricht.

## EP 3 325 734 B1

**Claims**

1. A sunshade device for a planar surface (2) of a building (1), consisting of a series of generally parallel blades or lamellar structures (8) covering the entire or a major part of said surface (2), **characterised in that** each blade or lamellar structure (8) has a longitudinal tilt parallel to the axis defined by a vector $V = B^\wedge N$, where B is a vector normal to the surface (2) and N is the vector indicating the Earth's axis of rotation, oriented North.

2. The device according to claim 1, **characterised in that** the blades or lamellar structures (8) are tilted transversally by an angle defined as a function of the terrestrial latitude of the location of said building (1) and orientation of said surface (2), and **in that** this angle is selected between 12 and 24° below the direction of the plane of the terrestrial equator, rotation being counted about the longitudinal direction of the blades or lamellar structures (8).

3. The device according to claim 1, **characterised in that** the blades or lamellar structures are tilted transversally by an angle defined as a function of the terrestrial latitude of the location of said building (1) and orientation of said surface (2), and **in that** this angle is selected to be greater than 50° above the direction of the plane of the terrestrial equator, rotation being counted about the longitudinal direction of the blades or lamellar structures (8).

4. The device according to claim 2 or 3 the blades or lamellar structures (8) of which are held to each other by a carrier structure (9), **characterised in that** one or more longilineal parts (20) crossing each blade or lamellar structure (8) and fastened to each of them enable the transverse tilt of the blades or lamellar structures (8) to be adjusted by acting on their flexibility in width, through bracing these longilineal parts (20).

5. The device according to claim 1, **characterised in that** one or more hinges enable the transverse tilt of the blades or lamellar structures to be custom adjusted.

6. The device according to claim 2 or 3, **characterised in that** the lamellar structures (8) consist of 2 or more distinct longilineal elements (10) held together and aligned in the width direction, and the thickness of which is at least equal to 0.35 time the distance separating 2 consecutive elements of this structure.

7. The device according to claim 6 applied to a glazing, **characterised in that** one or more of the longilineal elements (10) are fastened to one or more panes of a glazing and **in that** the transverse tilt of the lamellar structures (8) is corrected from refractive effects due to the sun's light rays passing through the pane(s) separating the longilineal elements (10) of a same lamellar structure, for a direction of the sun corresponding to the winter case (13), that is positioned between 12 and 24° below the direction of the plane of the terrestrial equator.

8. The device according to claim 7, **characterised in that** the at least one of the longilineal elements (10) consists of an opaque film affixed to the surface of the pane.

9. The device according to claim 7, **characterised in that** the longilineal elements (10) are lines printed either on the surfaces of a transparent film (30) affixed to the surface of the pane, or on the surfaces of several superimposed transparent films (30) affixed to the surface of the pane.

10. The device according to any of the previous claims applied to a glazing, **characterised in that** opaque zones making up or being part of the lamellar structures (8) are inserted inside at least one pane of the glazing, either by a physical element placed upon manufacturing the glazing material, or by techniques for opacifying 3D positioned points inside said glazing, and according to a geometry defined in the previous claims corrected from refractive effects for orienting the width of the blades.

11. The device according to any of the previous claims used as a shade screen of an opening of a building (1), **characterised in that** it is applied to a surface (2) which is not said opening of the building, but to large horizontal blades in the length direction, fitting the opening to be shielded.

12. The device according to claim 1, **characterised in that** each blade is not thin in thickness and **in that** the whole blades of the device make up a clerestory cladding for the surface of the building.

13. The device according to claim 1, **characterised in that** each blade (8) consists of at least one sheet and is divided into regular sections in the general sense of the longitudinal direction, so that, over long sections, the at least one sheet is disposed precisely along the sense of the longitudinal direction, and over short sections (41), the at least

15

one sheet joins the next long section along a direction oblique to the longitudinal direction.

14. The device according to claim 1, **characterised in that** each blade (8) consists of a transparent material at least one surface of which is partially covered with opaque films according to regular patterns.

15. The device according to claim 2, **characterised in that** each blade (8) consists of a sheet formed so that its sectional plane perpendicular to the longitudinal direction consists of a succession of at least one zone (35) the slope of which is lower than the average slope corresponding to the transverse tilt and substantially perpendicular to the direction of the sun rays for the sun's summer trajectories (14), and of at least one zone (36) the slope of which is greater than the average slope corresponding to the transverse tilt.

FIG. 1

FIG. 2

(1)

(8)

(2)

Vecteur V
(7)

(9)

Vecteur B
(3)

FIG. 3

FIG. 4

FIG. 5

FIG. 6

FIG. 7

FIG. 8

FIG. 9

FIG. 10

(41)

(8)

FIG. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2245254 A

- US 6105318 A